# EUROPÄISCHE PATENTSCHRIFT

(11) **EP 0 303 800 B1**
(45) Veröffentlichungstag und Bekanntmachung des Hinweises auf die Patenterteilung: **10.03.1993**
(21) Anmeldenummer: 88109973.3
(22) Anmeldetag: 23.06.1988
(51) Int. Cl.: F16K 1/226

(54) **Klappenabsperrventil**
Butterfly valve
Clapet d'arrêt

(30) Priorität: 17.08.1987 CH 3156/87
(43) Veröffentlichungstag der Anmeldung: 22.02.1989
(73) Patentinhaber: GEORG FISCHER AKTIENGESELLSCHAFT, CH-8201 Schaffhausen (CH)
(72) Erfinder: Hiltebrand, Eduard, CH-8200 Schaffhausen (CH)

(56) Entgegenhaltungen:
- AT-B- 232 814
- DE-A- 1 500 181
- DE-A- 3 104 211
- DE-B- 2 406 202
- US-A- 2 488 380
- US-A- 4 172 112

## Beschreibung

Die Erfindung betrifft ein Klappenabsperrventil, wie es im Oberbegriff von Anspruch 1 gekennzeichnet ist.

Durch die DE-A-3104211 ist ein Klappenabsperrventil bekanntgeworden, bei welchem die teilringförmigen Dichtungsteile einen vollen Rechteckquerschnitt aufweisen.

Für eine gute Abdichtung und geringe Drehmomentkräfte an der Absperrklappe muß die Dichtung entsprechend nachgiebig sein, d.h. sie muß aus einem weichen und somit nicht verschleißfesten Dichtungsmaterial hergestellt sein welches durch die Bewegung der Absperrklappe einem Verschleiß ausgesetzt ist.

Durch die US-A-2488380 ist ein Klappenabsperrventil der eingangs genannten Art bekanntgeworden, dessen im Gehäuse angeordnete Dichtung einen ringförmigen geschlossenen und durchgehenden Hohlraum aufweist, welcher über ein Ventil mit einem Druckmedium beaufschlagbar ist. Diese Dichtung mit dem Ventil ist sehr aufwendig, da die Herstellung eines geschlossenen Hohlraumes in der gezeigten Form nicht einfach ist. Bei einem schadhaften Ventil ist beim Schließen der Absperrklappe ein dichter Verschluß der Durchflußöffnung nicht mehr gewährleistet.

Aufgabe der vorliegenden Erfindung ist die Schaffung eines Klappenabsperrventils der eingangs genannten Art, dessen Dichtung bei geringem Verschleiß eine einwandfreie betriebssichere Abdichtung der Durchflußöffnung bei geschlossener Absperrklappe gewährleistet und wobei die Dichtung einfach herstellbar und montierbar sein soll. Die Absperrklappe soll auch bei größeren Rohrdurchmessern wie z.B. über ca. 100 mm die geforderte Dichtheit aufweisen, wobei die Drehklappe die entsprechende Festigkeit für die dabei entstehenden Drücke aufweisen muß.

Erfindungsgemäß wird diese Aufgabe durch die kennzeichnenden Merkmale des Anspruchs 1 gelöst.

Besonders vorteilhafte Ausgestaltungen der Erfindung sind in den abhängigen Ansprüchen gekennzeichnet.

Durch die erfindungsgemäß Ausbildung der Dichtung ist durch Bildung eines dichten Hohlraumes erst bei der Montage der beiden Gehäusehälften eine einfache Herstellung und Montage der Dichtung gewährleistet, wobei diese auch im Gehäuse in radialer Richtung einwandfrei formschlüssig gehalten ist. Trotz Verwendung von verschleißarmem Dichtungsmaterial wird eine gute Dichtwirkung und ein geringes Schließmoment an der Absperrklappe erreicht.

Die Erfindung ist in den beiliegenden Zeichnungen beispielsweise dargestellt und nachfolgend beschrieben. Es zeigen:
- Fig. 1: eine Ansicht, teils im Schnitt eines Klappenabsperrventils
- Fig. 2: einen Schnitt entlang der Linie II-II von Fig. 1
- Fig. 3: einen Querschnitt entlang der Linie III-III von Fig. 1, teils in Ansicht
- Fig. 4: eine Ausführungsvariante der Drehklappe in einem Schnitt gemäß Fig. 2
- Fig. 5: eine Ansicht der Dichtung teils im Schnitt
- Fig. 6: eine Draufsicht der in Fig. 5 dargestellten Dichtung
- Fig. 7: einen Teilschnitt entlang der Linie VII-VII von Fig. 5 in vergrößerter Darstellung vor der Montage, und
- Fig. 8: einen Teilschnitt gemäss Fig. 7 nach der Montage im Gehäuse.

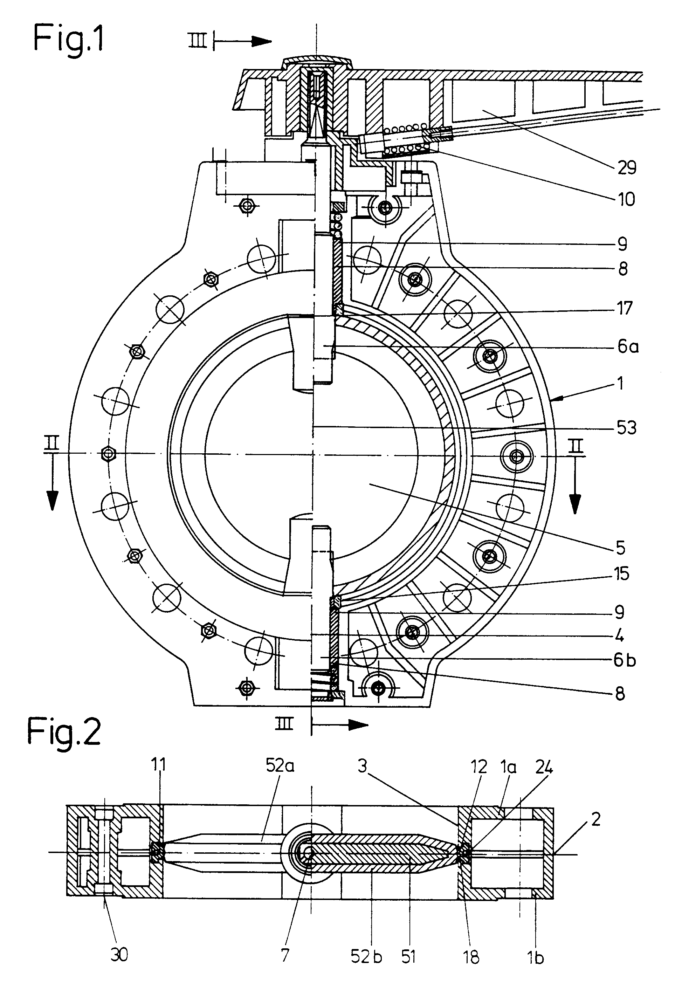

Die Fig.1 bis 3 zeigen ein Klappenabsperrventil, dessen Gehäuse 1 aus zwei Gehäusehälften 1a und1b besteht. Die Trennungsebene 2 der beiden Gehäusehälften 1a,1b verläuft quer zu einer Durchflußöffnung 3 des Gehäuses 1 und durch die Schwenkachse 4 einer kreisförmigen Absperrklappe 5. Die Absperrklappe 5 weist einen metallischen, vorzugsweise aus rostfreiem Stahl, bestehenden Kern 51 auf, welcher mittels zwei miteinander verschweißten schalenförmigen Teilen 52a, 52b aus Kunststoff ummantelt ist. Vorzugsweise wird eine Spiegelschweißung zur Verbindung der Teile 52a, 52b angewendet.

Die Trennebene bzw. die Schweißnähte 53 der beiden Teile 52a, 52b liegen in einer Ebene, welche durch die Schwenkachse 4 und in Schließstellung der Dichtklappe quer zur Trennungsebene 2 des Gehäuses 1 verläuft. Das bedeutet, dass die Schweißnähte beidseits der Schwenkachse 4 längs verlaufen. Mit dem metallischen Kern 51 sind zwei gegenüberliegende Wellenstücke 6a, 6b mittels einer Schraubverbindung 7 verbunden, welche die Schwenkachse 4 bilden. Mittels den Wellenstücken 6a, 6b ist die Absperrklappe 5 in Lagerbüchsen 8 drehbar gelagert. Die Lagerbüchsen 8 sind in Ausnehmungen 9 der beiden Gehäusehälften 1a, 1b angeordnet. Das Wellenstück 6a ragt einseitig aus dem Gehäuse 1 heraus, wobei hier ein Handgriff 29 mit einer Arretiervorrichtung 10 angeordnet ist. Anstatt des Handgriffs kann auch ein Stellantrieb drehfest mit der Welle verbunden am Gehäuse befestigt werden.

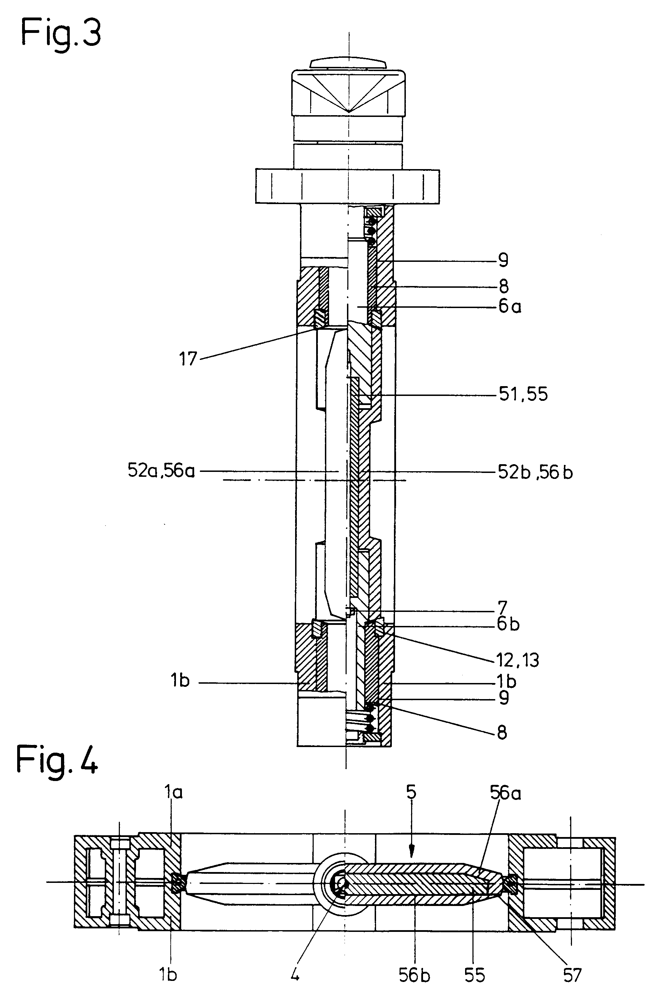

Fig. 4 zeigt eine Ausführungsvariante der Drehklappe 5, welche ebenfalls einen metallischen Kern 55 aufweist, der mit zwei schalenförmigen Teilen 56a, 56b aus Kunststoff ummantelt ist . Die Trennebene 57 der beiden schalenförmigen Teile 56a, 56b verläuft seitlich der Schwenkachse 4 in einer Ebene der Drehklappe 5, d.h. in Schließstellung der Drehklappe 5 verläuft die Trennebene 57 parallel zur Trennebene des Gehäuses 1. Die beiden schalenförmigen Teile 56a, 56b werden nach dem Aufsetzen auf den metallischen Kern 55 mittels einer Vibrations-Schweißung in der Trennebene 57 miteinander fest verbunden.

Das Einsetzen und Befestigen der beiden Wellenstücke 6a, 6b mittels der Schraubverbindung 7 erfolgt wie zu der ersten Ausführungsvariante bereits beschrieben.

Wie aus Fig. 2 ersichtlich, weisen die beiden Gehäusehälften 1a,1b in der Trennungsebene 2 Ringnuten 11 auf, in welchen eine Dichtung 12 angeordnet ist.

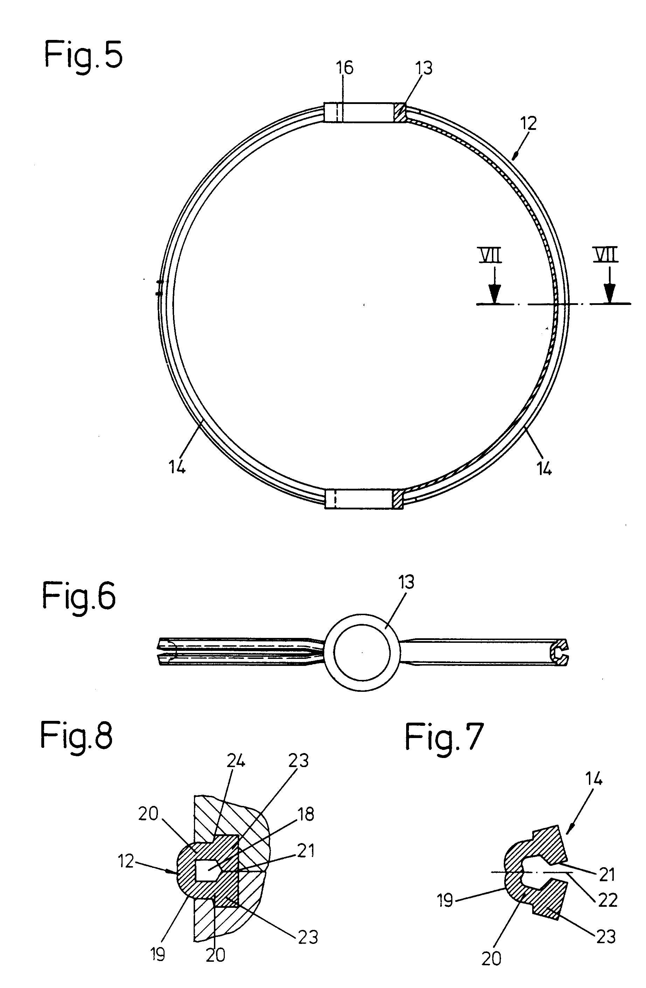

Die in den Fig. 5 bis 8 dargestellte Dichtung 12 weist zwei sich gegenüberliegende, zur Schwenkachse 4 konzentrische Ringe 13 auf, welche miteinander durch zwei teilringförmige Dichtungsteile 14 verbunden sind.

Die Dichtung 12 ist einstückig aus einem abriebfesten, gegen die meisten Durchflußmedien beständigen Elastomer hergestellt. Die beiden Ringe 13 sind in Ausnehmungen 15 der beiden Gehäusehälften 1a,1b angeordnet und weisen einen viereckigen Querschnitt mit einer konischen oder sphärischen Dichtfläche 16 auf, welche an einer entsprechenden Fläche 17 der Absperrklappe 5 anliegt.

Die teilringförmigen Dichtungsteile 14 weisen, wie aus Fig. 2 und 8 ersichtlich, im montierten Zustand einen umfangsmäßig verlaufenden Hohlraum 18 auf. Dieser wird durch eine bogenförmige Dichtungspartie 19 und zwei radial nach außen gerichtete Stege 20 gebildet, wobei die Stege 20 an ihren äußeren Enden zueinander gerichtete, erhabene Anlageflächen 21 aufweisen.

Durch das Verbinden der beiden Gehäusehälften 1a,1b mittels Schrauben 30 werden die Anlageflächen 21 mit Vorspannung so aneinandergepreßt, daß ein dichter Hohlraum 18 entsteht. Die beiden Anlageflächen 21 können auch, zur Erreichung eines dichten Hohlraums 18 miteinander verklebt werden.

Aus Fig. 7 ist der Querschnitt des teilringförmigen Dichtungsteiles 14 im Herstellungszustand der Dichtung 12 ersichtlich, wobei die beiden Stege 20 von der Dichtungspartie 19 weg V-förmig auseinanderlaufen, so daß ein Schlitz 22 zwischen den Anlageflächen 21 vorhanden ist. Diese Ausbildung ermöglicht das Entformen der im Preßverfahren hergestellten Dichtung 12.

An den Stegen 20 sind an deren äußeren Seitenflächen umfangsmäßig verlaufende Vorsprünge 23 angeordnet, welche in entsprechenden Vertiefungen 24 der Ringnuten 11 liegen, wodurch die Dichtung 12 in radialer Richtung gehalten wird.

Bei fest aneinanderliegenden Gehäusehälften 1a,1b gemäß Fig. 2 und 8 liegt die Dichtung 12 mit axialer Pressung in den Vertiefungen 24, wodurch die beiden Gehäusehälften nach außen hin abgedichtet werden. Die bogenförmige Dichtungspartie 19 ragt radial in die Durchflußöffnung 3 hinein, wobei beim Schließen der Absperrklappe 5 die Dichtung 12 verformt wird. Dabei wird die im Hohlraum 18 vorhandene Luft komprimiert, wodurch dieses Luftpolster den Schließvorgang erleichtert und gleichzeitig die Dichtwirkung verbessert wird.

Für die Dichtung kann ein verschleißarmes härteres Material verwendet werden, wobei trotzdem beim Schließvorgang ein geringes Drehmoment erforderlich ist und eine gute Dichtwirkung erreicht wird.

Fast alle Teile, insbesondere das Gehäuse, die mit dem Medium in Berührung kommenden Partien der Absperrklappe und die Büchsen sind aus einem Kunststoff wie z.B. Polyvinilchlorid oder Polypropylen hergestellt, wodurch das Klappenabsperrventil auch für aggressive Medien wie z.B. Säuren und Laugen verwendbar ist.

Durch den metallischen Kern in der Absperrklappe ist diese auch für größere Rohrdurchmesser z.B. über 100 mm geeignet, bei welchen hohe Kräfte auf die Absperrklappe wirken.

## Patentansprüche

1. Klappenabsperrventil mit einer um eine Schwenkachse (4) drehbaren Absperrklappe (5), mit einem geteilten Gehäuse (1a,1b), dessen Trennungsebene (2) quer zur Durchflußöffnung (3) durch die Schwenkachse (4) verläuft und mit einer in Ringnuten (11) der beiden Gehäusehälften (1a, 1b) angeordneten einteiligen Dichtung (12) mit zwei zur Schwenkachse (4) konzentrischen Ringen (13), welche durch zwei teilringformige im Querschnitt einen Hohlraum (18) und eine bogenförmige Dichtungspartie (19) aufweisende Dichtungsteile (14) die in der Trennungsebene (2) verlaufen, miteinander verbunden sind, dadurch gekennzeichnet, daß jedes teilringförmige Dichtungsteil (14) im Querschnitt gesehen, ausgehend von der bogenförmigen Dichtungspartie (19) nach außen gerichtete Stege (20) aufweist, welche an ihren äusseren Enden mit zueinander gerichteten erhabenen und bei montierten Gehäusehälften (1a, 1b) mit, vorgespannter Pressung aneinanderliegenden Anlageflächen (21) versehen sind daß die Stege (20) umfangsmäßig verlaufende, jeweils von der Trennungsebene (2) weggerich-tete Vorsprünge (23) aufweisen, welche in entsprechenden Vertiefungen (24) der Ringnuten (11) in den Gehäusehälften (1a, 1b) angeordnet sind und daß jeder zur Schwenkachse (4) konzentrische Ring (13) einen vollen viereckigen Querschnitt mit einer konischen oder sphärischen Dichtfläche (16) aufweist, welche an einer entsprechenden Fläche (17) der Absperrklappe (5) anliegt.

2. Klappenabsperrventil nach Anspruch 1, dadurch gekennzeichnet, daß die Anlageflächen (21) durch Klebung miteinander verbunden sind.

3. Klappenabsperrventil nach Anspruch 1 oder 2, dadurch gekennzeichnet, daß die Absperrklappe (5) einen metallischen Kern (51, 55) und einen aus Kunststoff bestehenden Mantel (52b, 56a, 56b) aufweist.

4. Klappenabsperrventil nach Anspruch 3, dadurch gekennzeichnet, daß der Mantel aus zwei schalenförmigen Teilen (52a, 52b, 56a, 56b) aus Kunststoff besteht, welche durch eine Schweißung miteinander verbunden sind.

5. Klappenabsperrventil nach Anspruch 3 oder 4, dadurch gekennzeichnet, daß die Trennebene bzw. die Schweißnähte (53) der schalenförmigen Teile (52a, 52b) in einer durch die Schwenkachse (4) und in Schließstellung der Dichtklappe (5) in einer quer zur Trennungsebene (2) durch das Gehäuse (1) gehenden Ebene liegen.

6. Klappenabsperrventil nach Anspruch 3 oder 4, dadurch gekennzeichnet, daß die Trennebene (57) der beiden schalenförmigen Teile (56a, 56b) in einer zur Schwenkachse (4) seitlich versetzten Ebene leigt, welche in Schließstellung der Drehklappe (5) parallel zur Trennungsebene (2) des Gehäuses (1) verläuft.

7. Klappenabsperrventil nach einem der Ansprüche 3 bis 6, dadurch gekennzeichnet, daß zwei die Schwenkachse (4) bildende, gegenüberliegende metallische Wellenstücke (6a, 6b) mittels einer Schraubverbindung (7) mit dem metallischen Kern (51, 55) fest verbunden sind.

## Claims

1. A butterfly valve with a throttle flap (5) able to be rotated about a swivel axis (4), with a divided housing (1a, 1b), the partition plane (2) of which extends transverse to the throughflow opening (3) through the swivel axis (4) and with a one-part seal (12) arranged in annular grooves (11) of both housing halves (1a, 1b), with two rings (13) which are concentric to the swivel axis (4), which rings are connected to each other through two seal parts (14) which are part-annular in cross-section and have a cavity (18) and an arched seal section (19), said seal parts extending in the partition plane (2), characterised in that each part-annular seal part (14) seen in cross-section has, emanating from the arched seal section (19), outwardly directed webs (20), which are provided on their outer ends with raised contact surfaces (21) which are directed towards each other and which abut each other with prestressed pressure when the housing halves (1a, 1b) are assembled, in that the webs (20), have projections (23) extending around the circumference and in each case directed away from the partition plane (2), said projections being arranged in corresponding depressions (24) of the annular grooves (11) in the housing halves (1a, 1b), and in that each ring (13) concentric to the swivel axis (4) has a full square cross-section with a conical or spherical sealing surface (16), which abuts a corresponding surface (17) of the throttle flap (5).

2. A butterfly valve according to claim 1, characterised in that the contact surfaces (21) are connected to each other by adhesion.

3. A butterfly valve according to claim 1 or 2, characterised in that the throttle flap (5) has a metallic core (51, 55) and a jacket (52b, 56a, 56b) consisting of plastics.

4. A butterfly valve according to claim 3, characterised in that the jacket consists of two shell-shaped parts (52a, 52b, 56a, 56b) of plastics, which are connected to each other by welding.

5. A butterfly valve according to claim 3 or 4, characterised in that the partition plane or the welding seams (53) of the shell-shaped parts (52a, 52b) lie in a plane passing through the swivel axis (4) and in the closed position of the seal flap (5) in a plane transverse to the partition plane (2) through the housing (1).

6. A butterfly valve according to claim 3 or 4, characterised in that the partition plane (57) of the two shell-shaped parts (56a, 56b) lies in a plane offset laterally relative to the swivel axis (4), which plane extends in the closed position of the swivel flap (5) parallel to the partition plane (2) of the housing (1).

7. A butterfly valve according to one of claims 3 to 6, characterised in that two opposing metallic shaft pieces (6a, 6b) forming the swivel axis (4) are firmly connected by means of a screw connection (7) to the metallic core (51, 55).

## Revendications

1. Valve ou clapet d'arrêt de type papillon avec un opercule d'arrêt (5) susceptible de tourner autour d'un axe de pivotement (4), avec un corps en plusieurs parties (1a, 1b), dont le plan de séparation (2) a une surface transversale à l'ouverture de passage d'écoulement (3), tout en passant par l'axe de pivotement (4), et avec un joint d'étanchéité (12) monobloc, disposé dans des gorges annulaires (11) des deux moitiés de corps (1a, 1b) et comportant deux bagues (13), concentriques par rapport à l'axe de pivotement (4), reliées ensemble, au moyen de deux parties d'étanchéité (14) s étendant dans le plan de séparation (2), présentant un espace creux (18) à section transversale en forme d'anneau partiel et une partie d'étanchéité (19) incurvée, caractérisée en ce que chaque partie d'étanchéité (14) en forme d'anneau partiel présente, en observant la section transversale, en partant de la partie d'étanchéité incurvée (19), des nervures (20) orientées vers l'extérieur, dont les extrémités extérieures ont une convexité tournée l'une vers l'autre et pourvues, lorsque les moitiés de corps (1a, 1b) sont montées, des surfaces d'appui (21) appuyant les unes sur les autres avec une pression prédéterminée, en ce que les nervures (20) présentent sur leur périphérie des saillies (23), orientées chaque fois en s'écartant du plan de séparation (2), qui sont disposées dans des cavités (24) correspondantes des gorges annulaires (11) ménagées dans les moitiés de corps (1a, 1b), et en ce que chaque bague (13) présente, concentriquement par rapport à l'axe de pivotement (4), une section transversale rectangulaire pleine, avec une surface d'étanchéité (16) conique ou sphérique, qui appuie sur une surface (17) correspondante de l'opercule d'arrêt (5).

2. Valve ou clapet d'arrêt de type papillon selon la revendication 1, caractérisée en ce que les surfaces d'appui (21) sont reliées par collage.

3. Valve ou clapet d'arrêt de type papillon selon la revendication 1 ou 2, caractérisée en ce que l'opercule d'arrêt (5) présente un noyau métallique (51, 55) et une enveloppe (52b, 56a, 56b) en matière synthétique.

4. Valve ou clapet d'arrêt de type papillon selon la revendication 3, caractérisée en ce que l'enveloppe est composée de deux parties (52a, 52b, 56a, 56b) en matière synthétique et en forme de coquille, parties qui sont reliées par une soudure.

5. Valve ou clapet d'arrêt de type papillon selon la revendication 3 ou 4, caractérisée en ce que le plan de séparation, ou les cordons de soudure (53) des parties en forme de coquille (52a, 52b) sont situés dans un plan passant par l'axe de pivotement (4) et, dans la position de fermeture de l'opercule d'arrêt (5), dans un plan passant transversalement par rapport au plan de séparation (2) passant dans le corps (1).

6. Valve ou clapet d'arrêt de type papillon selon la revendication 3 ou 4, caractérisée en ce que le plan de séparation (57) des deux parties en forme de coquille (56a, 56b) est situé dans un plan décalé latéralement par rapport à l'axe de pivotement (4) et passant, dans la position de fermeture de l'opercule d'arrêt (5), parallèlement au plan de séparation (2) du corps (1).

7. Valve ou clapet d'arrêt de type papillon selon l'une des revendications 3 à 6, caractérisé en ce que deux pièces d'arbre (6a, 6b) métalliques formant l'axe de pivotement (4) et qui se font face sont reliées rigidement au noyau métallique (51, 55), à l'aide d'une liaison filetée (7).
